# EUROPÄISCHE PATENTANMELDUNG

(11) **EP 0 867 121 A1**
(43) Veröffentlichungstag der Anmeldung: **30.09.1998**
(21) Anmeldenummer: 98104111.4
(22) Anmeldetag: 07.03.1998
(51) Int. Cl.: A23B 4/052

(54) **Transporteinrichtung**

(30) Priorität: 21.03.1997 DE 19712023
(71) Anmelder: Strasser Maschinenbau GmbH, 88250 Weingarten (DE)
(72) Erfinder: Strasser, Karl Heinz, 88270 Berg (DE)
(74) Vertreter: Engelhardt, Guido, Dipl.-Ing.

(57) **Zusammenfassung**

Bei einer Einrichtung (1) zum gesteuerten Transport von Gütern (2, 3, 4) bei deren Behandlung ist eine Beladestation (A), in der die Güter (2, 3, 4) in bevorratete Transportmittel (10, 10', 10'') einbringbar und diese mittels eines Elevators (12) in eine Transportebene (13) versetzbar sind, eine aus Kammern (21, 21', 21'') gebildete Behandlungsstation (B), die vertikal übereinander angeordnete Transportebeneen (22, 22', 22'', 22''') aufweist und denen die Transportmittel (10, 10', 10'') mittels Elevatoren (24) wahlweise zuführbar und entnehmbar sind sowie eine Entladestation (C), die mit Entnahmeebenen (31, 32, 33) versehen ist, denen die Transportmittel (10, 10', 10'') zuführbar und von denen die entleerten Transportmittel (10, 10', 10'') mittels eines Elevators (35) in eine an die Beladestation (A) angeschlossene Rückführstrecke (51) überführbar sind, vorgesehen.

Mittels dieser Einrichtung (1) ist es möglich, nicht nur unterschiedliche Produkte unmittelbar hintereinander der kontinuierlich arbeitenden Behandlungsstation (B) zuzuführen, sondern die Behandlung kann auch an jeweiligen Gegebenheiten leicht angepaßt werden. Des weiteren können die Güter (2, 3, 4) problemlos dem Arbeitskreis an jeder Stelle entnommen und wiederum in diesen an gleicher oder anderer Stelle eingegliedert werden, so daß eine zentrale Prozeßüberwachung und ein hoher Nutzungsgrad gegeben sind.

## Beschreibung

Die Erfindung bezieht sich auf eine Einrichtung zum gesteuerten Transport von Lebensmitteln oder ähnlichen Gütern, insbesondere Würsten, bei deren Behandlung.

Um Wurstwaren zu räuchern, zu kochen oder zu kühlen, ist es bekannt, diese auf Rauchstöcke aufzuhängen und mittels zweier mit seitlichem Abstand zueinander und mäanderförmig angeordneter Ketten durch einen oder mehrere Rauchkammern hindurchzutransportieren. Diese Verfahrensweise hat sich, sofern über einen längeren Zeitraum nur eine Produktart zu behandeln ist, zwar bewährt, bei wechselnden Produkten ist aber ein kontinuierlicher Durchlauf nicht vorteilhaft, da in den Ablauf nicht ohne weiteres eingegriffen werden kann und somit Produkte mitunter durch eine zu lange oder zu kurze Behandlungszeit ungünstig beeinflußt werden und zu Schaden kommen können. Eine Anpassung an unterschiedliche Produkte ist somit nicht möglich. Des weiteren ist hierbei von Nachteil, daß diese bekannten Einrichtungen einen hohen Arbeits- und damit Kostenaufwand erfordern. Die zu behandelnden Prudukte sind nämlich von Hand auf die Rauchstöcke aufzuhängen und diese sind ebenfalls von Hand in die ständig sich bewegenden Ketten einzubringen. Dies erfordert oftmals großes Geschick, auch ist beim Einfädeln der Rauchstöcke in die Kette eine hohe Verletzungsgefahr für das Bedienungspersonal gegeben. Und beim Umrüsten einer Anlage sind mitunter hohe Kapazitätsverluste in Kauf zu nehmen, da die Anlage stillzusetzen ist, des weiteren ist eine Kontrolle während des Behandlungsvorganges nicht durchzuführen.

Aufgabe der Erfindung ist es daher, eine Einrichtung zum gesteuerten Transport von Gütern zu schaffen, mittels der es möglich ist, nicht nur unterschiedliche Produkte unmittelbar hintereinander einer kontinuierlich arbeitenden Behandlungsstation zuzuführen, und zwar jederzeit in deren unterschiedlichen Behandlungsstufen, sondern die Behandlung der Produkte soll auch an die jeweiligen Gegebenheiten leicht anzupassen und/oder gegebenenfalls zu beenden sein. Des weiteren sollen die Produkte zu Kontrollzwecken problemlos dem Arbeitskreislauf an jeder Stelle entnommen und wiederum in diesen an gleicher oder einer anderen Stelle eingegliedert werden können. Der Bauaufwand, mit dem dies zu bewerkstelligen ist, soll gering gehalten werden, auch soll die Handhabung der Einrichtung auf einfache Weise, insbesondere die Einbringung der Güter in diese und deren Entnahme, vorzunehmen sein.

Gemäß der Erfindung wird dies mit einer Einrichtung errreicht, die gekennzeichnet ist durch eine Beladestation, in der die Güter z. B. mittels Greifer in bevorratete Transportmittel einbringbar und diese mittels eines Elevators in eine Transportebene versetzbar sind, eine aus einer oder mehreren geschlossenen Kammern gebildete Behandlungsstation, die jeweils eine oder mehrere vertikal übereinander angeordnete Transportebenen oder eine durch ein endloses meanderförmig angeordnetes Transportband gebildete Transportstrecke aufweist und denen die Transportmittel mittels Elevatoren bzw. Hubmittel wahlweise zuführbar und entnehmbar sind, und einer Entladestation, die mit einer oder mehreren Entnahmeebenen versehen ist, denen die der Behandlungsstation entnommenen Transportmittel unmittelbar oder mittels eines Elevators zuführbar und von denen die entleerten Transportmittel mittels eines weiteren Elevators in eine Rückführstrecke überführbar sind, die an die Beladestation angeschlossen ist.

Zweckmäßig ist es hierbei, die einzelnen Transportebenen der Beladestation, der Behandlungsstation und/oder der Entladestation sowie die Rückführstrecke jeweils durch zwei mit seitlichem Abstand zueinander angeordnete Tragschienen zu bilden, auf oder in denen Fördermittel in Form von Förderbändern oder dgl. angeordnet sind, mit denen die Transportmittel koppelbar sind, wobei den Transportebenen der Beladestation, der Behandlungsstation, der Entnahmestation und/oder die Rückführstrecke vorzugsweise im Bereich der Elevatoren integrierte steuerbare Anschlagleisten vorgeschaltet sein sollten.

Um insbesondere Wärmeverluste in den Kammern zu vermeiden, sollten diese im Bereich der Elevatoren mit gesteuert oder durch die Transportmittel zu öffnenden Durchgangsschleusen versehen sein.

Bei einer aus mehreren Behandlungskammern bestehenden Behandlungsstation können die Behandlungskammern in Verlängerung der Transportebenen oder seitlich nebeneinander angeordnet sein, auch kann, um in einer Kammer unterschiedliche Behandlungen vorzunehmen, zwischen einzelnen Transportebenen einer Aufnahmekammer eine vorzugsweise im Bereich der Elevatoren mit Durchgangsschleusen versehene vertikal verlaufende Zwischenwand eingesetzt sein.

Bei unterschiedlich ausgebildeten Transportmitteln ist es angezeigt, die Entnahmestation mit mindestens jeweils einer diesen zugeordneten Entnahmeebenen auszustatten, auch sollte die Rückführstrecke eine Vorrichtung zur Reinigung der Transportmittel aufweisen und die Elevatoren der Beladestation sollte mit Zwischenstücken als Verbindungsglieder zwischen zwei benachbarten Transportebenen bzw. der Rückführstrecke versehen sein.

Zweckmäßig ist es des weiteren, die Transportmittel in den beiden Endbereichen mit Kopfstücken auszustatten, die jeweils eine innere mit den Transportbändern zusammenwirkende Auflagefläche und eine äußere mit den Elevatoren zusammenwirkende Auflagefläche aufweisen, und zumindest eines der Kopfstücke eines Transportmittels sollte durch in dieses eingesetzte über die den Transportbändern zugeordnete Auflagefläche überstehende Kugeln oder dgl. seitlich geführt sein, wobei der mit der den Elevatoren zugeordnete Auflagefläche versehene Bereich der Kopfstücke in den beiden Endbereichen mit Freiräumen zur Aufnahme der Anschlagleisten versehen sein sollte. Außerdem können die Kopfstücke vorzugsweise in deren äußeren Bereichen jeweils mit einer unten offenen vorzugsweise satteldachförmigen Ausnehmung z. B für einen an dem Förderband der Transportstrecke angebrachten Mitnahmebolzen versehen sein.

Die Transportmittel können durch mit Freisparungen versehene mit den Kopfstücken verbundene Schalen oder durch an einem umlaufend ausgebildeten antreibbaren vorzugsweise in einem U-förmigen mit den Kopfstücken verbundenen Gehäuse eingesetzten Band angebrachte Haken gebildet sein, es ist aber auch möglich, die Transportmittel durch mehrere in den Kopfstücken drehbar gelagerte Rollen zu bilden, über die die Kopfstücke auf den Transportbändern der Tragschienen abgestützt sind.

Wird eine Transporteinrichtung gemäß der Erfindung ausgebildet, so ist es möglich, die zu behandelnden Güter auf einfache Weise und in beliebiger Reihenfolge in eine Behandlungsstation einzubringen und dort den jeweiligen Erfordernissen entsprechend zu behandeln, wobei es möglich ist, jedes Transportmittel individuell zu steuern und dessen Verweilzeit in den einzelnen Behandlungskammern und/oder Transportebenen bzw. der Transportstrecke zu beeinflussen. Es können somit beliebige Güter gleichzeitig auf unterschiedliche Weise behandelt werden, auch können die Güter zu Kontrollzwecken ohne Schwierigkeiten kurzfristig aus der Behandlungsstation herausgebracht werden.

Des weiteren ist es von Vorteil, daß die Einrichtung problemlos an unterschiedlich zu behandelnde Produkte anzupassen ist und daß Umrüstungen nahezu stufenlos vorzunehmen sind, zeitaufwendige Vorbereitungsarbeiten bei einem Produktwechsel sind demnach nicht erforderlich. Auch ist eine zentrale Prozeßüberwachung gegeben, ohne daß manuell in den Verfahrensablauf einzugreifen ist. Mittels an den Transportmitteln angebrachten Kennungen können diese und/oder die eingelegten Produkte vielmehr stets geortet und entsprechend behandelt werden. Bei Einsatz der vorschlagsgemäß ausgebildeten Einrichtung ist demnach ein hoher Nutzungsgrad, wobei insbesondere auch die Kapazität vorgeschalteter Einrichtungen, wie z.B. Wurstfüllmaschinen, in vollem Umfang genutzt werden können, gegeben.

In der Zeichnung ist ein Ausführungsbeispiel der gemäß der Erfindung ausgebildeten Einrichtung zum gesteuerten Transport von Lebensmitteln oder ähnlichen Gütern bei deren Behandlung dargestellt und nachfolgend im einzelnen erläutert. Hierbei zeigt:
- Figur 1: die aus einer Beladestation, einer Behandlungsstation und einer Entnahmestation bestehende Einrichtung, in Seitenansicht und in schematischer Darstellung,
- Figur 2: die Beladestation mit einem Teil der dieser nachgeschalteten Behandlungsstation nach Figur 1, in einer vergrößerten Darstellung,

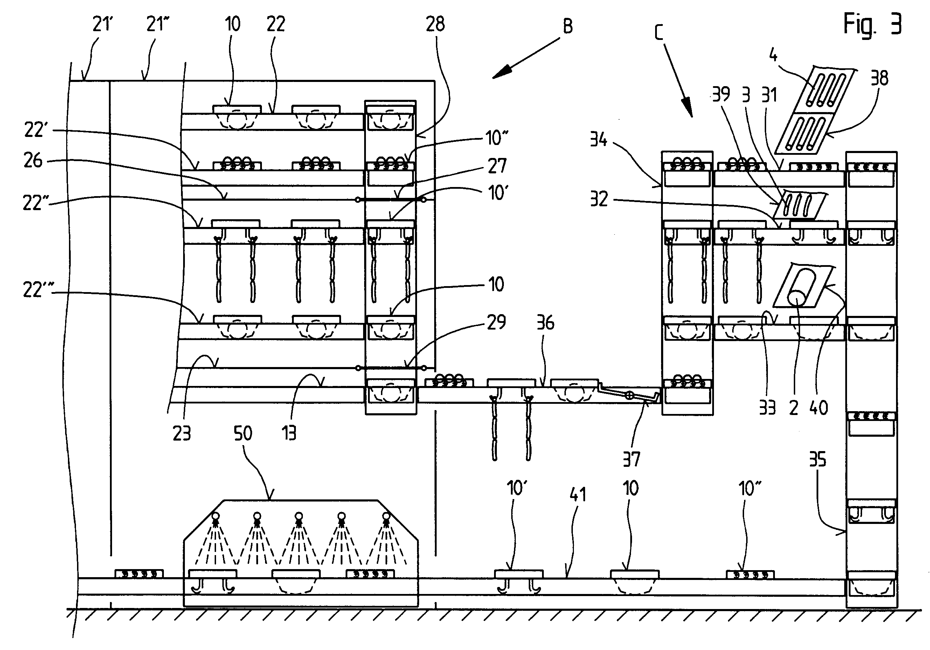

- Figur 3: die Entnahmestation mit einem Teil der dieser vorgeschalteten Behandlungsstation nach Figur 1, in einer vergrößerten Darstellung,
- Figur 4: eine mit einer Transportstrecke versehene Behandlungsstation, in einer Darstellung nach Figur 2,
- Figur 5: ein aus einem Kopfstück und einer Schale bestehendes Transportmittel in einer perspektivischen Darstellung,
- Figur 6: das bei dem Transportmittel nach Figur 5 vorgesehene Kopfstück in einer Seitenansicht und
- Figuren 7 und 8: andersartige Ausgestaltungen von bei der Einrichtung nach Figur 1 verwendbaren Transportmitteln.

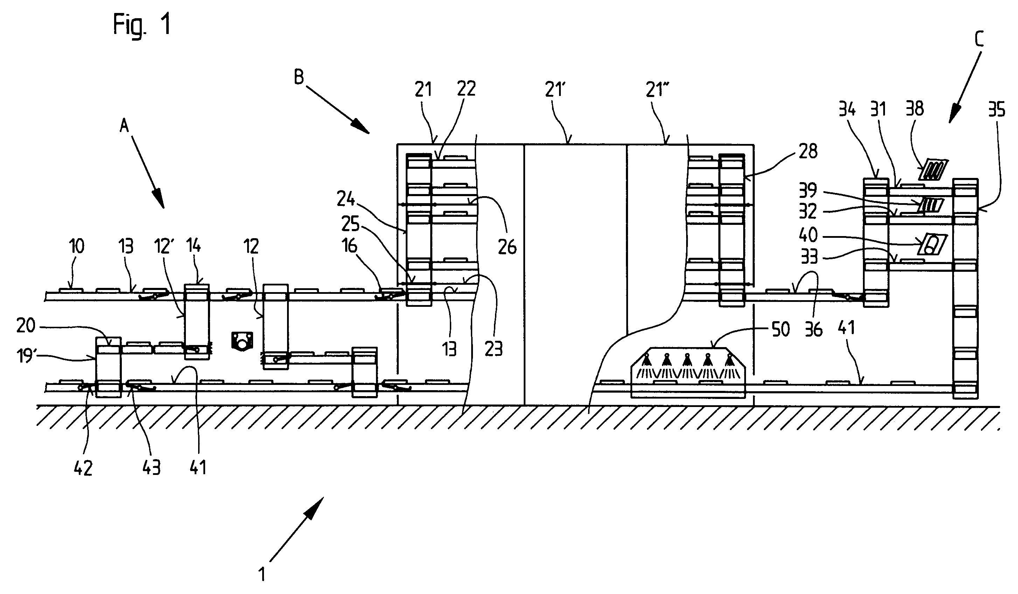

Die in Figur 1 dargestellte und mit 1 bezeichnete Einrichtung dient zum Transport von Gütern, beispielsweise unterschiedlich ausgebildeten Würsten 2, 3 und 4, mittels Transportmitteln 10, 10' und 10'' und besteht im wesentlichen aus einer Beladestation A, einer dieser nachgeschalteten Behandlungsstation B, in der die Würste 2, 3 und/oder 4 z.B. geräuchert, gekocht oder gekühlt werden, sowie einer Entnahmestation C, die über eine Rückführstrecke 41 für die entleerten Transportmittel 10, 10' 10'' mit der Beladestation 1 gekoppelt ist. Die Transportmittel 10, 10', 10'' können somit in einem geschlossenen Arbeitskreislauf eingesetzt werden.

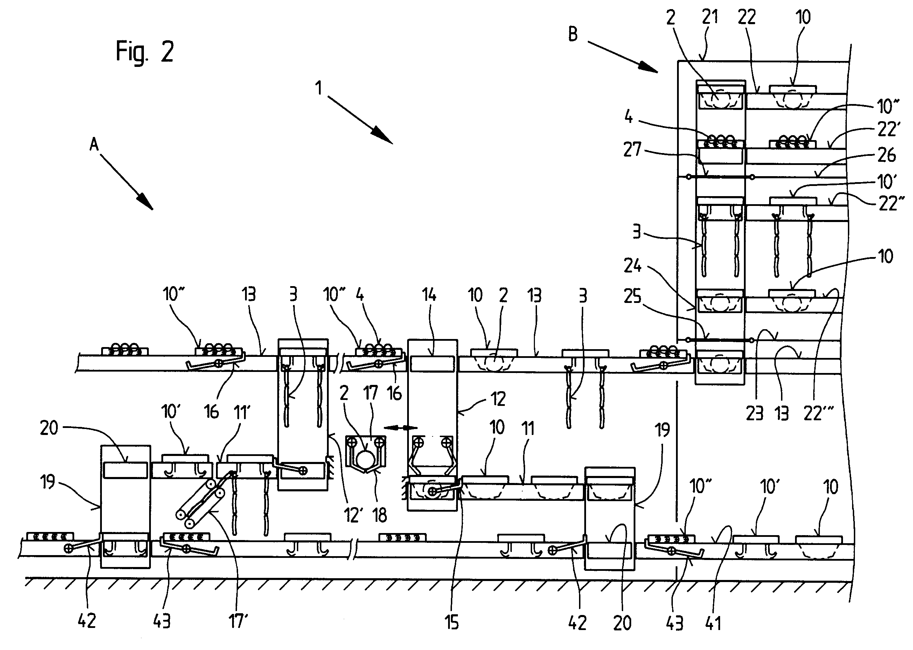

Die Beladestaion A weist, wie dies insbesondere auch der Figur 2 zu entnehmen ist, mehrere Speicherebenen 11, 11' ... auf, in der die Transportmittel 10 bzw. 10' bzw. 10'' geordnet bevorratet werden. In der Beladestation A werden den Transportmitteln 10, 10', 10'' die zu behandelnden Würste 2, 3 oder 4 zugeführt, und zwar jeweils mittels eines seitlich verschiebbaren Greifers 18, in den die Würste 2, 3 oder 4 von nur schematisch dargestellten Beschickungsvorrichtungen 17 eingebracht bzw. mittels Förderbänder 17' unmittelbar eingehängt werden. Mit Hilfe von Elevatoren 12, 12', denen verschwenkbare Anschlagleisten 15 zur Positionierung der Transportmittel 10, 10', 10'' zugeordnet sind, werden diese in eine Transportebene 13 übergeführt, die an die Beladestation B angeschlossen ist. Von der Rückführstrecke 41 können die Transportmittel 10, 10', 10'' über einen Elevator 19, 19' auf die Speicherebene 11 gebracht werden, bei drei unterschiedlich ausgebildeten Transportmitteln 10, 10', 10'' zweckmäßigerweise mittels dreier Elevatoren 19, 19', die jeweils ebenfalls mit Anschlagleisten 42 versehen und einer der Ausgestaltungen 10, 10' bzw. 10'' der Transportmittel zugeordnet sind. Die Elevatoren 12 und 19' sind bei dem gezeigten Ausführungsbeispiel mit Zwischenstücken 14 bzw. 20 ausgestattet, um die Transportebene 13 bzw. die Rückführstrecke 41 überbrücken und somit überfahren zu können. Des weiteren sind den Elevatoren 12 und 19' ebenfalls gesteuerte Anschlagleisten 16 bzw. 42 und 43 zugeordnet, um jeweils nur eines der Transportmittel 10, 10' oder 10'' über das Zwischenstück 14 weiterzutransportieren bzw. den Elevatoren 19 bzw. 19' zuzuführen.

Die Beladestation A ist bei dem gezeigten Ausführungsbeispiel aus drei geschlossenen Kammern 21, 21' und 21'' zusammengesetzt, in denen die in den Transportmittel 10, 10', 10'' befindlichen Würste 2, 3 und 4 auf vertikal übereinander angeordneten Transportebenen 22, 22', 22'' und 22''' behandelt werden. Mittels eines Elevators 24 werden die Transportmittel 10, 10', 10'' von der Transportebene 13 über eine in dem Boden 23 der jeweiligen Kammer 21, 21', 21'' eingesetzte Durchgangsschleuse 25 eingebracht und können mittels eines weiteren Elevators 28, der eine Durchgangsschleuse 29 durchgreift, entnommen und auf die Transportebene 13 zurückgeführt werden.

Die einzelnen Kammern 21, 21', 21'' der Behandlungsstation B können auch horizontale Zwischenwände 26, die ebenfalls mit Durchgangsschleusen 27 ausgestattet sind, zusätzlich unterteilt werden, so daß in einer Kammer 21, 21' und/oder 21'' unterschiedliche Behandlungen bei z.B. unterschiedlichen Temperaturen durchgeführt werden können.

Die Behandlungsstation B ist über eine Zwischenebene 36 mit der Entnahmestation C verbunden. Mittels eines Elevators 34 können die Transportmittel 10, 10', 10'' vertikal übereinander angeordneten Entnahmeebenen 31, 32 oder 33 zugeführt werden, jede der Entnahmeebenen 31, 32 und 33 ist hierbei einem der Transportmittel 10 bzw. 10' bzw. 10'' zugeordnet, so daß z.B. in der Entnahmeebene 31 die Würste 4 auf ein Transportband 38, in der Entnahmeebene 32 die Würste 2 auf ein Transportband 39 und in der Entnahmeebene 33 die Würste 2 auf ein Transportband 40 überzuführen sind. Mittels eines Elevators 36 können sodann die entleerten Transportmittel 10, 10', 10'' auf die Rückführstrecke 41 gebracht werden. Zur gesteuerten Einbringung der Transportmittel 10, 10', 10'' in den Elevator 34 ist die Zwischenebene 36 mit ebenfalls mit einer Anschlagleiste 37 ausgestattet.

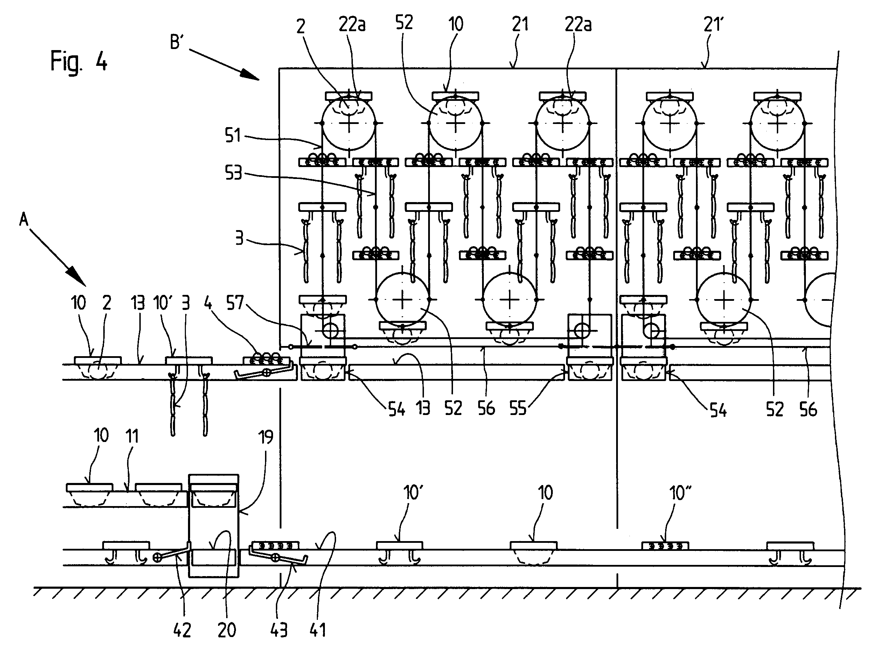

Bei der in Figur 4 dargestellten Behandlungsstaion B' ist als Transportstrecke 22a ein endloses Transportband 51 vorgesehen, das mehrfach über Umlenkrollen 52 geführt und somit mäanderförmig angeordnet ist. Zur Mitnahme der Transportmittel 10, 10', 10'' sind an dem Transportband 51 eine Vielzahl von einander gegenüberliegend angeordneten Mitnahmebolzen 53 angebracht. Mittels Hubeinrichtungen 54 und 55 können die Transportmittel 10, 10', 10'' durch einen mit Durchgangsschleusen 57 ausgestatten Boden 56 in die Mitnahmebolzen 53 eingehängt werden.

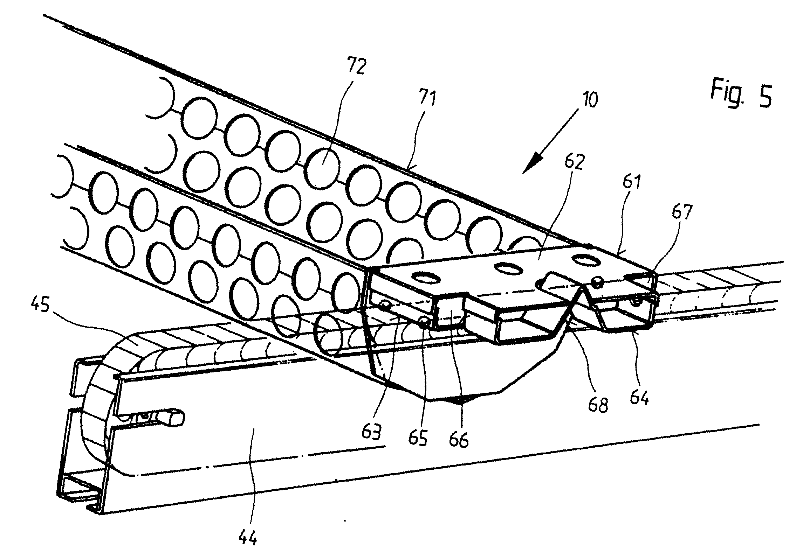

Die einzelnen Transport- und Entnahmeebenen 13, 22, 31, 32 und 33 sowie die Rückführstrecke 51 sind, wie dies insbesondere der Figur 5 zu entnehmen ist, aus zwei mit seitlichem Abstand zueinander angeordnete Tragschienen 44 gebildet, die mit Fördermitteln in Form von angetriebenen umlaufenden Förderbändern 45 versehen sind. Die unterschiedlich gestalteten Transportmittel 10, 10', 10'' sind mit den Förderbändern 45 durch Auflage auf diesen koppelbar.

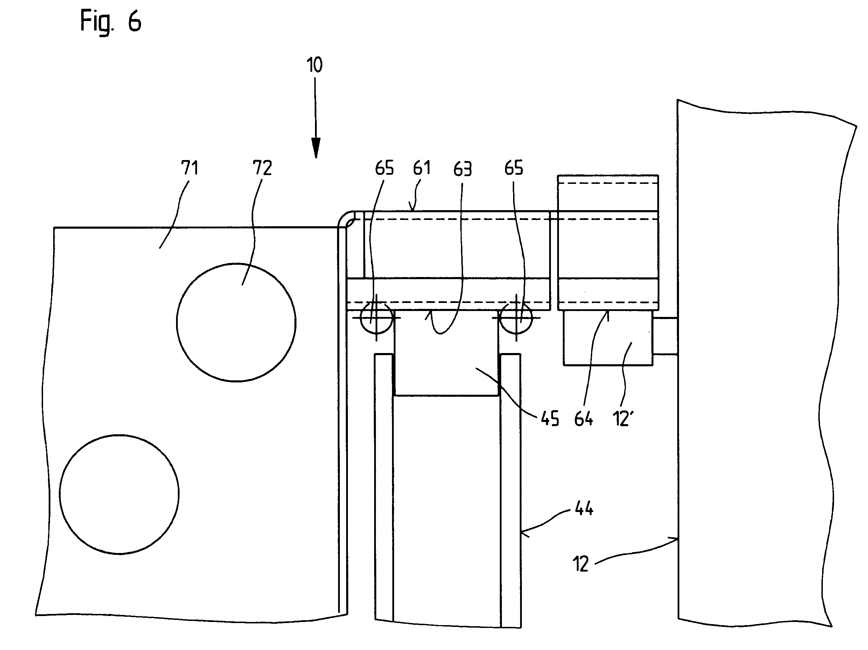

Die Transportmittel 10, 10', 10'' weisen gemäß den Figuren 5 bis 8 in den beiden Endbereichen jeweils ein Kopfstück 61 auf, die aus Profilstücken 62 bestehen und mit einer inneren mit den Transportbändern 45 zusammenwirkende Auflagefläche 63 und eine äußere mit den Elevatoren 12, 19, 24, 28, 34 und 35 zusammenwirkende Auflagefläche 64, an denen sich, wie dies in Figur 6 gezeigt ist, an den Elevator 12; 19; 24; 28; 34 und 35 angebrachte Leisten 12' anlegen können, versehen sind. Zumindest eines der Kopfstücke 61 eines Transportmittels 10, 10', 10'' ist durch in das Profilstück 62 eingesetzte über die den Transportbändern 45 zugerodnete Auflagefläche 63 überstehende Kugeln 65 seitlich geführt.

In den Kopfstücken 61 sind des weiteren im Bereich der Aufnahmefläche 64 drei Freiräume 66 und 67 vorgesehen, in die die Anschlagleisten 16 eingreifen können, so daß beim Aufstauen der Transportmittel 10, 10', 10'' diese aneinander anliegen können. Außerdem weisen die Kopfstücke 61 nach unten offene satteldachförmig ausgebildete Aufnahmeöffnungen 68 auf, in die die an dem Förderband 51 angebrachten Mitnahmebolzen 53 eingreifen können.

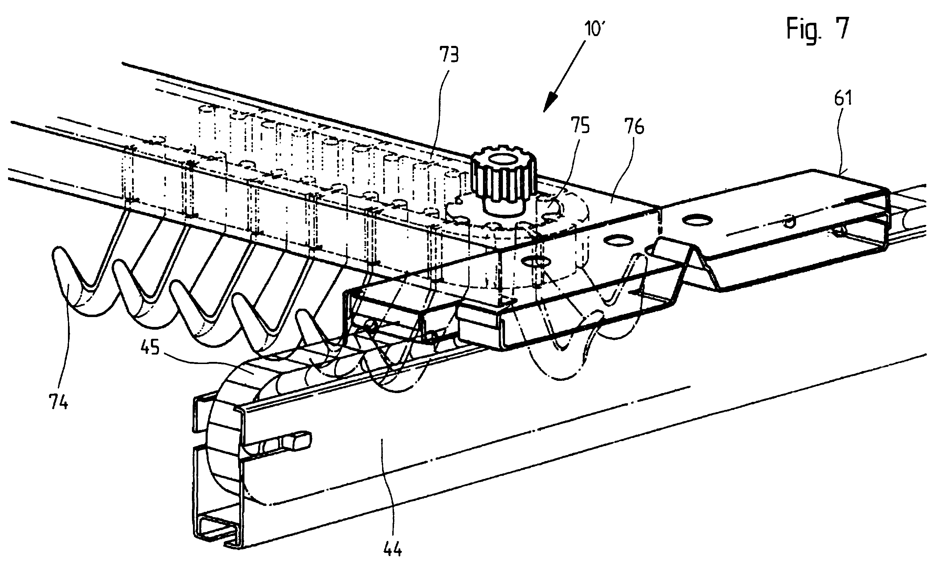

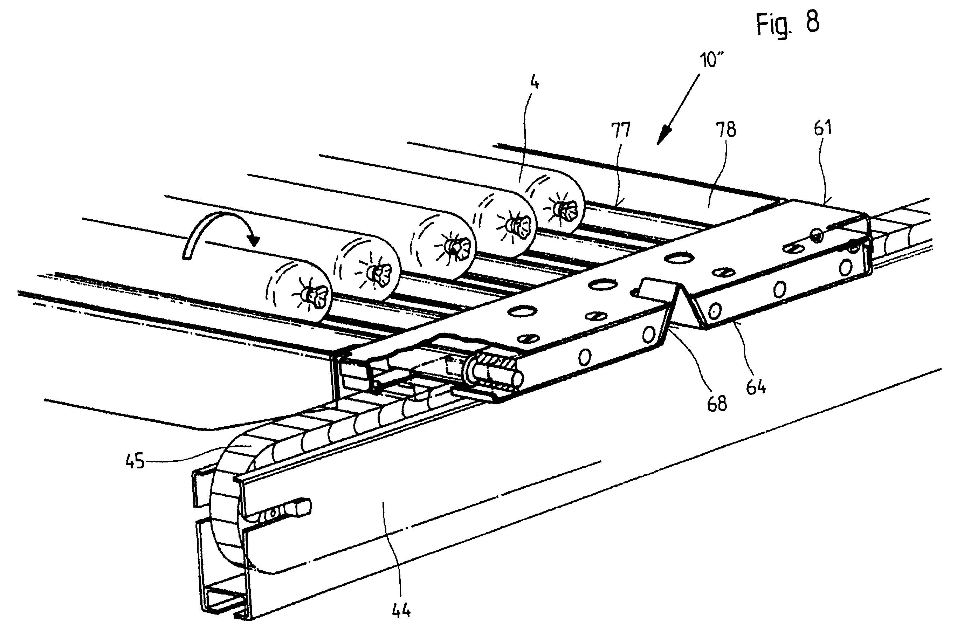

Die Transportmittel 10 sind gemäß den Figuren 5 und 6 als Schalen 71 ausgebildet, in die Ausnehmungen 72 eingearbeitet sind, damit Dampf zu den eingelagerten Würsten 2 gelangen kann. Nach Figur 7 sind die Transportmittel 10' mit Haken 74 ausgestattet, die an einem in einem Gehäuse 76 eingesetzten Band 73 befestigt sind. Das Band 73 ist, um die Würste 3 den Haken 74 zuführen zu können, antreibbar und über eine Umlenkrolle 75 geführt. Bei der in Figur 8 gezeigten Ausgestaltung sind die Transportmittel 10'' durch drehbar in den Kopfstücken 61 gelagerte Rollen 77 gebildet, die teilweise von einem Gehäuse 78 umgeben sind und auf den Förderbändern 75 aufliegen. Beim Aufstauen der Transportmittel 10'' werden, da die Kopfstücke 71 stillstehen die Rollen 77 aber durch die Förderbänder 45 angetrieben werden, die Würste 4 dadurch gedreht, so daß eine ungleichmäßige Behandlung zuverlässig vermieden wird.

Die von nicht dargestellten Beschickungseinrichtungen der Beladestatin A der Einrichtung 1 zugeführten Würste 2, 3 und 4 können in beliebiger Reihenfolge in die Behandlungsstation B eingebracht und in dieser den jeweiligen Erfordernissen entsprechend behandelt werden. Dabei können die einzelnen Transportmittel 10, 10', 10'' auf jede der Transportebenen 22, 22', 22'' oder 22''' mittels des Elevators 24 abgesetzt werden, auch können einzelne der Transportmittel 10, 10', 10'' jederzeit mittels des Elevators 28, um z.B. Kontrollen vorzunehmen, entnommen und zurückgeführt bzw. nach Beendigung der Behandlung über die Zwischenebene 36 zur Entnahmestation C gebracht und auf der den jeweiligen Würsten 2, 3 und 4 zugeordneten Entnahmeebene 31, 32 bzw. 33 entleert werden. Und da die Transportmittel 10, 10', 10'' über den Elevator 35 und die Transportstrecke 41 unmittelbar zur Beladestation A zurückzuführen sind, wobei in einer in die Transportstrecke 41 integrierten Reinigungsvorrichtung 50 selbsttätig eine Säuberung vorgenommen werden kann, ist ein kontinuierlicher Betrieb der Transporteinrichtung 1 gewährleistet.

## Patentansprüche

1. Einrichtung zum gesteuerten Transport von Lebensmitteln oder ähnlichen Gütern, insbesondere Würsten, bei deren Behandlung,
**gekennzeichnet durch**
eine Beladestation (A), in der die Güter (2, 3, 4) z. B. mittels Greifer (18) in bevorratete Transportmittel (10, 10', 10'') einbringbar und diese mittels eines Elevators (12) in eine Transportebene (13) versetzbar sind,
eine aus einer oder mehreren geschlossenen Kammern (21, 21', 21'') gebildete Behandlungsstation (B), die jeweils eine oder mehrere vertikal übereinander angeordnete Transportebenen (22, 22', 22'', 22''') oder eine durch ein endloses mäanderförmig angeordnetes Transportband (51) gebildete Transportschnecke (22 a) aufweist und denen die Transportmittel (10, 10', 10'') mittels Elevatoren (24, 24') bzw. Hubmittel (54, 55) wahlweise zuführbar und entnehmbar sind, und
einer Entladestation (C), die mit einer oder mehreren Entnahmeebenen (31, 32, 33) versehen ist, denen die der Behandlungsstation (B) entnommenen Transportmittel (10, 10', 10'') unmittelbar oder mittels eines Elevators (34) zuführbar und von denen die entleerten Transportmittel (10, 10', 10'') mittels eines weiteren Elevators (35) in eine Rückführstrecke (41) überführbar sind, die an die Beladestation (A) angeschlossen ist.

2. Einrichtung nach Anspruch 1,
**dadurch gekennzeichnet,**
daß die einzelnen Transportebenen (13, 22, 31, 32, 33) der Beladestation (A), der Behandlungsstation (B) und/oder der Entladestation (C) sowie die Rückführstrecke (41) jeweils durch zwei mit seitlichem Abstand zueinander angeordnete Tragschienen (44) gebildet sind, auf oder in denen Fördermittel in Form von Förderbändern (45) oder dgl. angeordnet sind, mit denen die Transportmittel (10, 10', 10'') koppelbar sind.

3. Einrichtung nach Anspruch 1 oder 2,
**dadurch gekennzeichnet,**
daß den Transportebenen (13, 22, 31, 32, 33) der Beladestation (A), der Behandlungsstation (B), der Entnahmestation (C) und/oder die Rückführstrecke (41) vorzugsweise im Bereich der Elevatoren (12, 24, 34) integrierte steuerbare Anschlagleisten (15, 16, 37) vorgeschaltet sind.

4. Einrichtung nach einem oder mehreren der
Ansprüche 1 bis 3,
**dadurch gekennzeichnet,**
daß die einzelnen Kammern (21, 21', 21'') der Behandlungsstation (B) im Bereich der Elevatoren (24, 28) mit gesteuert oder durch die Transportmittel (10, 10', 10'') zu öffnenden Durchgangsschleusen (25, 29) versehen sind.

5. Einrichtung nach einem oder mehreren der
Ansprüche 1 bis 4,
**dadurch gekennzeichnet,**
daß bei einer aus mehreren Behandlungskammern (20, 21' 21'') bestehenden Behandlungsstation (B) diese in Verlängerung der Transportebenen (22, 22', 22'', 22''') oder seitlich nebeneinander angeordnet sind.

6. Einrichtung nach einem oder mehreren der
Ansprüche 1 bis 5,
**dadurch gekennzeichnet,**
daß zwischen einzelnen Transportebenen (22', 22'') einer Aufnahmekammer (21) eine vorzugsweise im Bereich der Elevatoren (24, 28) mit Durchgangsschleusen (27) versehene vertikal verlaufende Zwischenwand (26) eingesetzt ist.

7. Einrichtung nach einem oder mehreren der
Ansprüche 1 bis 6,
**dadurch gekennzeichnet,**
daß bei unterschiedlich ausgebildeten Transportmitteln (10, 10', 10'') die Entnahmestation (C) mit mindestens jeweils eine diesen zugeordnete Entnahmeebene (31, 32, 33) aufweist.

8. Einrichtung nach einem oder mehreren der
Ansprüche 1 bis 7,
**dadurch gekennzeichnet**,
daß die Rückführstrecke (41) mit einer Vorrichtung (50) zur Reinigung der Transportmittel (10, 10', 10'') versehen ist.

9. Einrichtung nach einem oder mehreren der
Ansprüche 1 bis 8,
**dadurch gekennzeichnet,**
daß die Elevatoren (12, 19) der Beladestation (A) mit Zwischenstücken (14, 20) als Verbindungsglieder zwischen zwei benachbarten Transportebenen (13) bzw. der Rückführstrecke (41) versehen sind.

10. Einrichtung nach einem oder mehreren der
Ansprüche 1 bis 9,
**dadurch gekennzeichnet,**
daß die Transportmittel (10, 10', 10'') in den beiden Endbereichen mit Kopfstücken (61) versehen sind, die jeweils eine innere mit den Transportbändern (45) zusammenwirkende Auflagefläche (63) und eine äußere mit den Elevatoren (12, 19, 24, 28, 34, 35) zusammenwirkende Auflagefläche (64) aufweisen.

11. Einrichtung nach Anspruch 10,
**dadurch gekennzeichnet,**
daß zumindest eines der Kopfstücke (61) eines Transportmittels (10, 10', 10'') mit durch in dieses eingesetzte über die den Transportbändern (45) zugeordnete Auflagefläche (63) überstehende Kugeln (65) oder dgl. seitlich geführt ist.

12. Einrichtung nach Anspruch 10 oder 11,
**dadurch gekennzeichnet,**
daß der mit der den Elevatoren (12, 19, 24, 28, 34, 35) zugeordnete Auflagefläche (64) versehene Bereich der Kopfstücke (61) in den beiden Endbereichen mit Freiräumen (66, 67) zur Aufnahme der Anschlagleisten (15, 16) versehen ist.

13. Einrichtung nach einem oder mehreren der
Ansprüche 1 bis 12,
**dadurch gekennzeichnet,**
daß die Kopfstücke (61) vorzugsweise in deren äußeren Bereich jeweils mit einer unten offenen vorzugsweise satteldachförmig ausgebildeten Aufnahmeöffnung (68) z. B. für einen an dem Förderband (51) angebrachten Mitnahmebolzen (57) versehen sind.

14. Einrichtung nach einem oder mehreren der
Ansprüche 1 bis 13,
**dadurch gekennzeichnet,**
daß die Transportmittel (10) durch mit Freisparungen (72) versehene mit den Kopfstücken (61) verbundene Schalen (71) gebildet sind.

15. Einrichtung nach einem oder mehreren der
Ansprüche 1 bis 13,
**dadurch gekennzeichnet,**
daß die Transportmittel (10) durch an einem umlaufend ausgebildeten antreibbaren vorzugsweise in einem U-förmigen mit den Kopfstücken (61) verbundenen Gehäuse (76) eingesetzten Band (73) angebrachte Haken (74) gebildet sind.

16. Einrichtung nach einem oder mehreren der
Ansprüche 1 bis 13,
**dadurch gekennzeichnet,**
daß die Transportmittel (10'') durch mehrere in den Kopfstücken (61) drehbar gelagerte Rollen (77) gebildet sind, über die die Kopfstücke (61) auf den Transportbändern (45) der Tragschienen (46) abgestützt sind.
